# EUROPEAN PATENT SPECIFICATION

(11) **EP 1 446 284 B1**
(45) Date of publication and mention of the grant of the patent: **01.10.2008**
(21) Application number: 02766184.2
(22) Date of filing: 30.08.2002
(51) Int. Cl.: B32B 3/26, C08J 5/24

(54) **INFUSION OF CYCLIC OLEFIN RESINS INTO POROUS MATERIALS**
INFUSION VON ZYKLISCHEN OLEFINHARZEN IN PORÖSE MATERIALIEN
INFUSION DE RESINES D'OLEFINES CYCLIQUES DANS DES MATERIAUX POREUX

(30) Priority: 30.08.2001 US 316290 P
(43) Date of publication of application: 18.08.2004
(73) Proprietor: Materia, Inc., Pasadena, Ca 91107 (US)
(72) Inventor: CRUCE, Christopher, J., Poway, CA 92064 (US); FILICE, Gary, W., Moorpark, CA 93021 (US); GIARDELLO, Michael, A., Pasadena, CA 91106 (US); STEPHEN, Anthony, R., South Pasadena, CA 91030 (US); TRIMMER, Mark, S., Monrovia, CA 91016 (US)
(74) Representative: Andrae, Steffen
(86) International application number: PCT/US2002/027654
(87) International publication number: WO 2003/020504

(56) References cited:
- EP-A- 0 347 819
- WO-A-99/60030
- US-A- 5 063 103
- US-B1- 6 323 296
- US-B1- 6 409 875
- US-B1- 6 410 110
- US-B1- 6 436 476

## Description

This application claims the benefit of co-pending U.S. Provisional Patent Application Serial No. 60/316,290, filed August 30, 2001.

### BACKGROUND

The invention is directed generally to methods and systems for the infusion of cyclic olefin resins into free standing porous materials, together with ring opening metathesis polymerization (ROMP) catalysts to effect the polymerization of such olefins within the porous materials to yield specific composite structures and novel derivatives.

A wide variety of both natural and synthetic structural materials have a porous nature. Common examples include wood, cement and concrete, open-cell foams and sponges, paper and cardboard, and various sintered materials. The porosity of these materials may be an unintended consequence of their mode of origin or may be a deliberate design feature. Depending upon the intended use of a given material, such porosity may offer advantages such as decreased weight, absorbency, breathability, or unique conductivity or insulative characteristics. However, for many applications, porosity can also lead to problems such as decreased mechanical performance and durability. As a common example, water or moisture routinely enters and exits the pores of porous materials. Aside from affecting the resulting mechanical properties of the material, this moisture often also accelerates degradation by chemical and/or mechanical action.

Many types of treatments have been devised to try to protect and improve the performance of porous materials. Paints and other coatings are often applied for surface protection but yield little improvement of mechanical performance. A variety of chemical agents can be impregnated into porous materials as preservatives, fire-retardants, water-repellents, or biocides, albeit generally to the detriment of mechanical strength and toughness. In addition, most of these agents slowly leach away over time, diminishing their effectiveness and creating environmental issues. Polymeric impregnants potentially alleviate some of these issues but can be difficult to apply, especially with microporous materials. The viscosities of thermoplastic, and even many thermoset, resins are very high, making impregnation and wetting of porous materials very difficult. Low-viscosity thermoset resins, which would be easier to infuse, typically form brittle polymers upon cure. In addition, thermoset resin chemistries may be incompatible with moieties present in the interstices or surfaces of porous materials (porous materials have very high surface areas) and are quite often susceptible to hydrolysis, thereby limiting their long-term durability.

Low-viscosity thermoset resins yielding tough, moisture-resistant polymers would seem to be ideal candidates for infusion into porous materials as protectants and mechanical performance enhancers. Such polymers may be obtained by the ring-opening metathesis polymerization (ROMP) of cyclic olefin monomers. The resulting ROMP polymers possess non-hydrolyzable hydrocarbon backbones and are generally very tough. ROMP, however, typically depends upon transition metal catalysts that are extremely sensitive to air, moisture, and functional groups that may be present in the monomers or the porous materials. Thus, ROMP polymers are not commonly considered as candidate impregnants for porous materials.

Recently, however, certain ruthenium and osmium carbene compounds have been identified as effective catalysts for ROMP even in the presence of air, water, and most functional groups. Examples of such metathesis catalysts have been previously described in, for example, United States Patent Nos. 5,312,940; 5,969,170; 5,917,071; 5,977,393; 6,111,121; 6,211,391, 6,225,488 and 6,306,987 and PCT Publications WO 98/39346, WO 99/00396, WO 99/00397, WO 99/28330, WO 99/29701, WO 99/50330, WO 99/51344, WO 00/15339, WO 00/58322, WO 00/71554 and WO 02/14376. Surprisingly, it has now also been found that these catalysts enable ROMP of cyclic olefin monomers that have been infused into a variety of porous materials including, for example, such highly functional materials as wood and concrete.

### BRIEF DESCRIPTION OF THE DRAWINGS

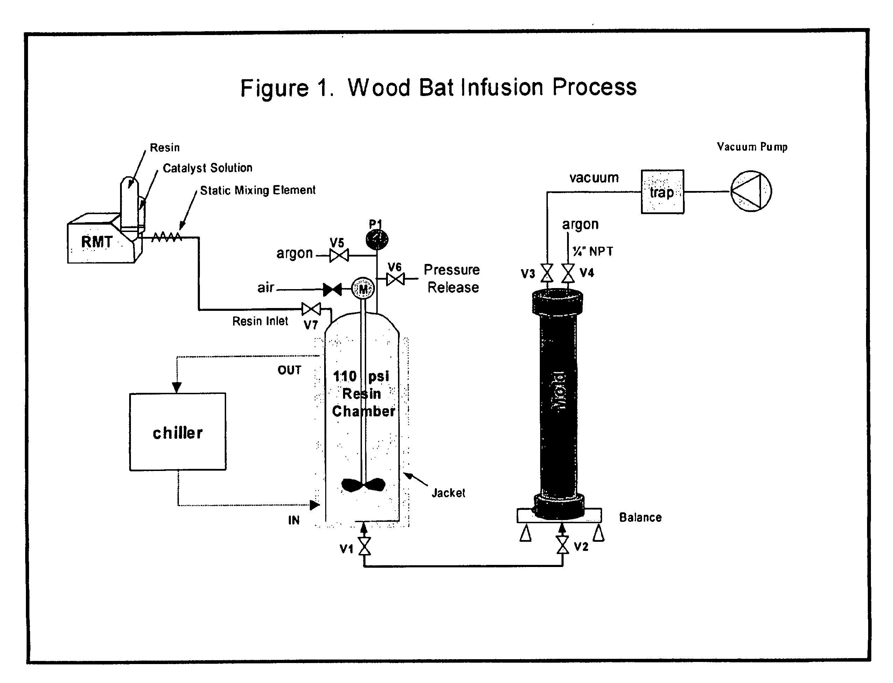

Figure 1 shows a preferred method of infusing baseball bats with DCPD resin.

### DETAILED DESCRIPTION

The present invention encompasses novel compositions comprising porous materials infused with polymers obtained from metathesis reactions, for example ROMP derived polymers and ADMET derived polymers. Another embodiment of the invention is cyclic olefin monomer formulations, including ruthenium or osmium carbene metathesis catalysts, useful for the infusion of porous materials. A further embodiment of the invention includes methods for preparing the porous materials infused with cyclic olefin resin formulations. Other embodiments of the present invention are specific composite structures and articles fabricated from porous materials infused with cyclic olefin polymers.

A number of catalysts have been developed recently for initiating olefin metathesis reactions, including ring-opening metathesis polymerization (ROMP) of cyclic olefins, ring-closing metathesis (RCM) of dienes to form ring-closed products, acyclic diene metathesis polymerization (ADMET), depolymerization of unsaturated polymers to form the depolymerized products, synthesis of telechelic polymers by reaction of a cyclic olefin with a functionalized olefin, and synthesis of cyclic olefins by self-metathesis of an acyclic olefin or cross-metathesis of two acyclic olefins.

Any suitable metathesis catalyst may be used. Preferred metathesis catalysts include, but are not limited to, neutral ruthenium or osmium metal carbene complexes that possess metal centers that are formally in the +2 oxidation state, have an electron count of 16, are penta-coordinated, and are of the general formula I. Other preferred metathesis catalysts include, but are not limited to, cationic ruthenium or osmium metal carbene complexes that possess metal centers that are formally in the +2 oxidation state, have an electron count of 14, are tetra-coordinated, and are of the general formula II. Still other preferred metathesis catalysts include, but are not limited to, neutral ruthenium or osmium metal carbene comlexes that possess metal centers that are formally in the +2 oxidation state, have an electron count of 18, are hexa-coordinated, and are of the general formula III. 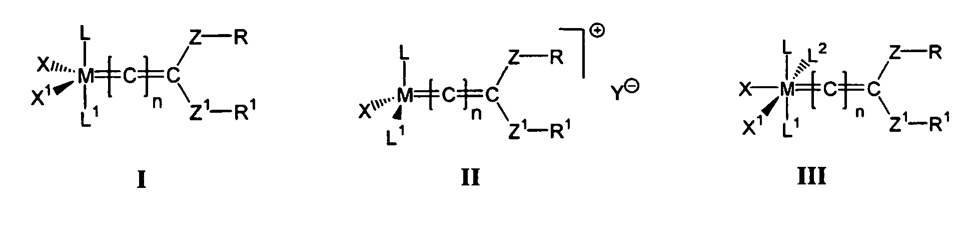 wherein:
M is ruthenium or osmium;
n is an integer between 0-5;
L, L¹ and L² are each independently any neutral electron donor ligand; R, and R¹ are each independently hydrogen or any hydrocarbyl or silyl moiety;
X and X¹ are each independently any anionic ligand;
Y is any noncoordinating anion;
Z and Z¹ are each independently any linker selected from the group nil, -O-, -S-, -NR²-, -PR²-, -P(=O)R²-, -P(OR²)-, -P(=O)(OR²)-, -C(=O)-, -C(=O)O-, -OC (=O)-, -OC(=O)O-, -S(=O)-, or -S(=O)₂-; and
wherein any two or more of X, X³, L, L¹,L ², Z, Z¹, R, R¹, and R² may be optionally joined together to form a multidentate ligand and wherein any one or more of X, X¹, L, L¹,L², Z, Z¹, R, and R¹ may be optionally linked chemically to a solid or glassy support.

In preferred embodiments of these catalysts, L, L¹ and L² are each independently selected from the group consisting of phosphine, sulfonated phosphine, phosphite, phosphinite, phosphonite, arsine, stibine, ether, amine, amide, imine, sulfoxide, carbonyl, carboxyl, isocyanide, nitrosyl, pyridine, quinoline, thioether, and nucleophilic carbenes of the general formula IV or V: 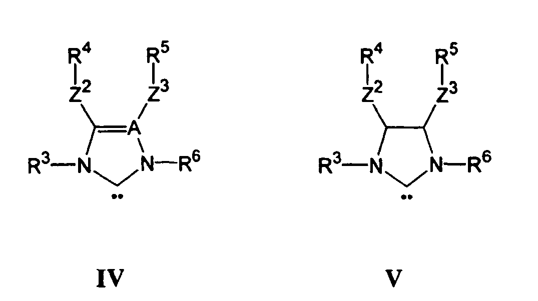 wherein:
A is either carbon or nitrogen;
R³, R⁴, R⁵, and R⁶ are each independently hydrogen or any hydrocarbyl moiety, except that in the case where A is nitrogen R⁵ is nil;
Z² and Z³ are each independently any linker selected from the group nil, -O-, -S-, -NR²-, -PR²-, -P(=O)R²-, -P(OR²)-, -P(=O)(OR²)-, -C(=O)-, -C(=O)O-, -OC (=O)-, -OC(=O)O-, -S(=O)-, or -S(=O)₂-, except that in the case where A is nitrogen Z³ is nil; and
Z², Z³, R⁴, and R⁵ together may optionally form a cyclic optionally substituted with one or more moieties selected from the group consisting of C₁-C₁₀ alkyl, C₁-C₁₀ alkoxy, aryl, and a functional group selected from the group consisting of hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen.

In more preferred embodiments, L and L¹ are each a phosphine of the formula PR⁷R⁸R⁹, where R⁷, R⁸, and R⁹ are each independently any hydrocarbyl moiety, particularly aryl, primary C₁-C₁₀ alkyl, secondary alkyl or cycloalkyl. In even more preferred embodiments, L and L¹ are selected from the group consisting
of -P(cyclohexyl)₃, -P(cyclopentyl)₃, -P(isopropyl)₃, -P(butyl)₃, and -P(phenyl)₃. These phosphines are commonly referred to by their abbreviated designations: PCy₃, PCp₃, P(i-Pr)₃, PBu₃, and PPh₃, respectively.

In the most preferred embodiments, L is a phosphine and L¹ is a nucleophilic carbene of the general formula III. Preferably, L is selected from the group consisting
of -P(cyclohexyl)₃, -P(cyclopentyl)₃,
-P(isopropyl)₃, -P(butyl)₃, and -P(phenyl)₃ and L¹ is selected from the group consisting of structures VI, VII, or VIII (wherein m is an integer between 0 and 5):

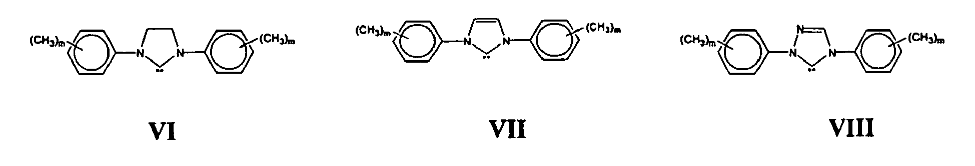

The ligand L¹ of structure VII is commonly referred to as "IMES" in the case where m=3. The saturated variant of structure VI is similarly referred to as "s-IMES" in the case where m=3.

In other preferred embodiments, L is a phosphine or a nucleophilic carbene of the general formula IV and L¹ and L² are each independently a pyridine or substituted pyridine ligand or L¹ and L² together form a chelating bispyridine or phenanthroline ligand, either of which may be substituted or unsubstituted.

Relating to R and R¹-R⁹, examples of hydrocarbyl moieties include, but are not limited to, the group consisting of C₁-C₂₀ alkyl, C₃-C₂₀ cycloalkyl, C₂-C₂₀ alkenyl, C₂-C₂₀ alkynyl, aryl, heteroaryl, aralkyl, or arylalkyl. Examples of silyl moieties include, but are not limited to, the group consisting of tri(hydrocarbyl)silyl, tri(hydrocarbyloxy)silyl, or mixed (hydrocarbyl)(hydrocarbyloxy)silyl. Optionally, each of the R, R¹ or R² substituent groups may be substituted with one or more hydrocarbyl or silyl moieties, which, in turn, may each be further substituted with one or more groups selected from a halogen, a C₁-C₅ alkyl, C₁-C₅ alkoxy, and phenyl. Moreover, any of the catalyst ligands may further include one or more functional groups. Examples of suitable functional groups include but are not limited to: hydroxyl, thiol, thioether, ketone, aldehyde, ester, ether, amine, imine, amide, nitro, carboxylic acid, disulfide, carbonate, isocyanate, carbodiimide, carboalkoxy, carbamate, and halogen. In addition, any or all of R, R¹ and R² may be joined together to form a bridging or cyclic structure.

In preferred embodiments of these catalysts, the R substituent is hydrogen and the R¹ substituent is selected from the group consisting C₁-C₂₀ alkyl, C₂-C₂₀ alkenyl, aryl, alkaryl, aralkyl, trialkylsilyl, and trialkoxysilyl. In even more preferred embodiments, n equals 0, 1 or 2 and the R¹ substituent is phenyl, *t*-butyl or vinyl, optionally substituted with one or more moieties selected from the group consisting of C₁-C₅ alkyl, C₁-C₅ alkoxy, phenyl, and a functional group. In especially preferred embodiments, n equals 0 or 1 and R¹ is phenyl, t-butyl, or vinyl substituted with one or more moieties selected from the group consisting of chloride, bromide, iodide, fluoride, -NO₂, -NMe₂, methyl, methoxy and phenyl.

In preferred embodiments of these catalysts, X and X¹ are each independently hydrogen, halide, or one of the following groups: C₁-C₂₀ alkyl, aryl, C₁-C₂₀ alkoxide, aryloxide, C₃-C₂₀ alkyldiketonate, aryldiketonate, C₁-C₂₀ carboxylate, arylsulfonate, C₁-C₂₀ alkylsulfonate, C₁-C₂₀ alkylthiol, aryl thiol, C₁-C₂₀ alkylsulfonyl, or C₁-C₂₀ alkylsulfinyl. Optionally, X and X¹ may be substituted with one or more moieties selected from the group consisting of C₁-C₁₀ alkyl, C₁-C₁₀ alkoxy, and aryl which in turn may each be further substituted with one or more groups selected from halogen, C₁-C₅ alkyl, C₁-C₅ alkoxy, and phenyl. In more preferred embodiments, X and X¹ are halide, benzoate, C₁-C₅ carboxylate, C₁-C₅ alkyl, phenoxy, C₁-C₅ alkoxy, C₁-C₅ alkylthiol, aryl thiol, aryl, and C₁-C₅ alkyl sulfonate. In even more preferred embodiments, X and X¹ are each halide, CF₃CO₂, CH₃CO₂, CFH₂CO₂, (CH₃)₃CO, (CF₃)₂(CH₃)CO, (CF₃)(CH₃)₂CO, PhO, MeO, EtO, tosylate, mesylate, or trifluoromethanesulfonate. In the most preferred embodiments, X and X¹ are each chloride, bromide, or iodide. In addition, the X and X¹ together may comprise a bidentate ligand.

Y may be derived from any tetracoordinated boron compound or any hexacoordinated phosphorus compound. Preferred boron compounds include BF₄⁻, BPh₄⁻, and fluorinated derivatives of BPh₄⁻. Preferred phosphorous compounds include PF₆⁻ and PO₄⁻. The noncoordinating anion may be also any one of the following: ClO₄⁻, SO₄⁻, NO₃⁻, OTeF₅⁻, F₃CSO₃⁻, H₃CSO₃⁻, CF₃COO⁻, PhSO₃⁻, or (CH₃)C₆H₅SO₃⁻. Y may be also derived from carboranes, fullerides, and aluminoxanes.

The catalyst:olefin monomer ratio in the invention is preferably between about 1:5 and about 1:1,000,000. More preferably, the catalyst:olefin ratio is between about 1:100 and about 1:100,000 and, most preferably, is between about 1:1,000 and about 1:30,000. Particularly preferred metal catalysts include, but are not limited to: (PCy₃)₂Cl₂Ru=CHPh, (PCy₃)₂Cl₂Ru=CH-CH=CMe₂, (PCy₃)₂Cl₂Ru=C=CHCMe₃, (PCy₃)₂ClRu=C=CHSiMe₃, (PCy₃)(s-IMES)Cl₂Ru=CH-CH=CMe₂, (PCp₃)₂Cl₂Ru=CH-CH=CMe₂, (PCp₃)₂Cl₂Ru=C=CHPh, (PCp₃)(s-IMES)Cl₂Ru=CH-CH=CMe₂, (PPh₃)(s-IMES)Cl₂Ru=C=CHCMe₃, (PPh₃)₂Cl₂Ru=C=CHSiMe₃, (P(i-Pr)₃)₂Cl₂Ru=C=CHPh, (PPh₃)(s-IMES)Cl₂Ru=C=CHSiMe₃, (PBu₃)₂Cl₂Ru=C=CHPh, (PPh₃)(s-IMES)Cl₂Ru=CH-CH=CMe₂, (PCy₃)(s-IMES)Cl₂Ru=C=CHPh, (PCp₃)(s-IMES)Cl₂Ru=C=CHPh, (PBu₃)(s-IMES)Cl₂Ru=C=CHPh, (PCy₃)(s-IMES)Cl₂Ru=CHPh, (PBu₃)(s-IMES)Cl₂Ru=CH-CH=CMe₂, (PCy₃)(IMES)Cl₂Ru=CHPh, (PPh₃)₂Cl₂Ru=C=CHCMe₃, (PCy₃)(IMES)Cl₂Ru=C=CHCMe₃, (PCp₃)(IMES)Cl₂Ru=CH-CH=CMe₂, (PBu₃)(IMES)Cl₂Ru=C=CHPh, (s-IMES)(C₅H₅N)₂Cl₂Ru=CHPh, and (s-IMES)(3-Br-C₅H₄N)₂Cl₂Ru=CH-CH=CMe₂.

The inventive formulation resins include any olefin monomer and metathesis catalyst. The olefin monomers may be used alone or mixed with each other in various combinations to adjust the properties of the olefin monomer composition. For example, mixtures of cyclopentadiene oligomers offer a reduced melting point and yield cured olefin copolymers with increased mechanical strength and stiffness relative to pure poly-DCPD. As another example, incorporation of COD, norbornene, or alkyl norbornene comonomers tend to yield cured olefin copolymers that are relatively soft and rubbery. The polyolefin resins of the invention are amenable to thermosetting and are tolerant of various additives, stabilizers, rate modifiers, hardness and/or toughness modifiers, viscosity modifiers, adhesion or coupling agents, and fillers.

Any suitable cyclic olefin monomer can be used with the present invention. Within the scope of this invention, olefin monomers for infusion include at least one of all "tight" cycloolefins as described in US 6,001,909; and at least one of all cycloolefins as described in US 5,840,238 and US 5,922,802; and at least one of all Diels-Alder adducts as described in US 6,100,323. The most preferred olefin monomer for use in the invention is dicyclopentadiene (DCPD). Various DCPD suppliers and purities may be used such as Lyondell 108 (94.6% purity), Velsicol UHP (99+% purity), Cymetech Ultrene^{®} (97% and 99% purities), and Hitachi (99+% purity). High-purity grades of DCPD, such as Ultrene^{®} 99, are preferred. In certain preferred formulations, the DCPD resin may optionally contain other cyclopentadiene oligomers, including trimers, tetramers, pentamers, and the like. Such oligomers may be introduced into DCPD by heat treatment of DCPD as described in U.S. Patent 4,899,005 to Lane (et al.) and U.S. Patent 4,751,337 to Espy (et al.). The oligomer content may be controlled by varying the heat treatment conditions or by blending oligomer mixtures of known composition with DCPD until the desired oligomer concentration is obtained. Advantages of using such oligomer mixtures include decreased melting point of the monomer mixture and increased mechanical properties and glass transition temperature of the cured resin.

Other preferred olefin monomers include cyclooctadiene (COD; DuPont); cyclooctene (COE); cyclohexenylnorbomene; norbornene; norbornene dicarboxylic anhydride (nadic anhydride); norbornadiene (Elf Atochem); and substituted norbornenes including ethylidene norbornene (ENB), butyl norbornene, hexyl norbornene, octyl norbornene, decyl norbornene, and the like. Preferably, the olefinic moieties include mono-or disubstituted olefins and cycloolefins containing between 3 and 200 carbons. Most preferably, metathesis-active olefinic moieties include cyclic or multicyclic olefins, for example, cyclopropenes, cyclobutenes, cycloheptenes, cyclooctenes, [2.2.1]bicycloheptenes, [2.2.2]bicyclooctenes, benzocyclobutenes, cyclopentenes, cyclopentadiene oligomers including trimers, tetramers, pentamers, and the like; cyclohexenes. It is also understood that such compositions include frameworks in which one or more of the carbon atoms carry substituents derived from radical fragments including halogens, pseudohalogens, alkyl, aryl, acyl, carboxyl, alkoxy, alkyl- and arylthiolate, amino, aminoalkyl, and the like, or in which one or more carbon atoms have been replaced by, for example, silicon, oxygen, sulfur, nitrogen, phosphorus, antimony, or boron. For example, the olefin may be substituted with one or more groups such as thiol, thioether, ketone, aldehyde, ester, ether, amine, amide, nitro, carboxylic acid, disulfide, carbonate, isocyanate, phosphate, phosphite, sulfate, sulfite, sulfonyl, carbodiimide, carboalkoxy, carbamate, halogen, or pseudohalogen. Similarly, the olefin may be substituted with one or more groups such as C₁-C₂₀ alkyl, aryl, acyl, C₁-C₂₀ alkoxide, aryloxide, C₃-C₂₀ alkyldiketonate, aryldiketonate, C₁-C₂₀ carboxylate, arylsulfonate, C₁-C₂₀ alkylsulfonate, C₁-C₂₀ alkylthio, arylthio, C₁-C₂₀ alkylsulfonyl, and C₁-C₂₀ alkylsulfinyl, C₁-C₂₀ alkylphosphate, arylphosphate, wherein the moiety may be substituted or unsubstituted.

In the invention, the viscosity of the formulated olefin monomers (e.g., the olefin monomers combined with any additives, stabilizers, or modifiers other than density modulators, fillers, or fibers) is typically less than about 500 centipoise at temperatures near room temperature (e.g., from about 25-35°C). Preferably, the viscosity of the formulated olefin monomers is less than about 200 centipoise, more preferably is less than about 75 centipoise, and most preferably, is less than about 50 centipoise. In many circumstances, the viscosity is less than 25 centipoise to promote facile infusion. The viscosity of the formulated olefin monomers can be controlled by selection of the combination of monomers and additives, stabilizers, and modifiers used. The viscosity of the formulated resin may be increased or decreased by varying the temperature or by the use of additives such as thixotropes, thickeners, or dilutents.

Preferred hardness modulators include, for example, elastomeric additives such as polybutadienes, polyisoprenes, and the like. Polybutadienes and polyisoprenes of various sources, as well as various number-average molecular weights (Mₙ) or weight-average molecular weights (M_{w}), may be utilized in the invention as rubber-like hardness modulators. Unexpectedly, the poly-DCPD resins of the invention allow compositions containing polybutadiene to be clear rather than opaque. The hardness modulators of the invention, when added to a polyolefin resin composition, alter the hardness, toughness and/or surface "feel" of the composition compared to the unmodified or native polyolefin. In addition to butadiene and isoprene-based elastomers, other hardness modulators include plasticizers such as dioctyl phthalate and various molecular weight hydrocarbon and the like jellies, greases and waxes, carboxylic acids and salts thereof, and co-monomers such as norbornene, cyclooctadiene, cyclooctene, cyclohexenylnorbornene, norbornadiene, cyclopentene and/or methylcyclopentene. The amount of hardness modulator included in the polyolefin compositions of the invention is preferably about 0.1%-20% by weight of the olefin monomer to which it is added. More preferably, the amount of hardness modulator is about 1%-10% by weight of the olefin monomer and, most preferably, is about 2.5%-7.5%.

Especially preferred toughness modulators are rubber triblock copolymers such as styrene-butadiene-styrene, styrene-isoprene-styrene, styrene-ethylene/butylenes-styrene, styrene-ethylene/propylene-styrene, and the like. An example of such toughness modulators is the commercially available Kraton^{™} polymers. Other preferred toughness modulators include polysiloxanes, because the resulting polyolefin compositions possess significantly increased toughness properties without significant concomitant losses in heat distortion temperature (HDT). The amount of toughness modulator included in the polyolefin compositions of the invention is preferably about 0.1%-10% by weight of the olefin monomer to which it is added. More preferably, the amount of toughness modulator is about 0.5%-6% by weight of the olefin monomer and, most preferably, is about 2%-4%. For example, poly-DCPD resins containing 3 parts per hundred low molecular weight (MW) poly(dimethylsiloxane) (Shin Etsu DMF-50) possess notched Izod impact values in excess of 4 ft.-1b./in. and HDT values above 130°C. Hardness and toughness modulators are further described in PCT Publication No. WO 99/60030, the contents of which are incorporated herein by reference.

The UV and oxidative resistance of the polyolefin compositions of the invention may be enhanced by the addition of various stabilizing additives such as primary antioxidants (e.g., sterically hindered phenols and the like), secondary antioxidants (e.g., organophosphites, thioesters, and the like), light stabilizers (e.g., hindered amine light stabilizers or HALS), and UV light absorbers (e.g., hydroxy benzophenone absorbers, hydroxyphenylbenzotriazole absorbers, and the like). Preferably, one or more stabilizing additives are included in the polyolefin resin composition at a level from about 0.01-15 phr. More preferably, the antioxidant(s) are present at a level of about 0.05-10 phr and, most preferably, 0.1-8 phr. Exemplary primary antioxidants include, for example, 4,4'-methylenebis (2,6-di-tertiary-butylphenol) (Ethanox 702^{®}; Albemarle Corporation), 1,3,5-trimethyl-2,4,6-tris (3,5-di-tert-butyl-4-hydroxybenzyl) benzene (Ethanox 330^{®}; Albemarle Corporation), octadecyl-3-(3',5'-di-tert-butyl-4'-hydroxyphenyl) propionate (Irganox 1076^{®}; Ciba-Geigy), and pentaerythritol tetrakis(3-(3,5-di-tert-butyl-4-hydroxyphenyl)propionate)(Irganox^{®} 1010; Ciba-Geigy). Exemplary secondary antioxidants include tris(2,4-ditert-butylphenyl)phosphite (Irgafos^{®} 168; Ciba-Geigy), 1:11(3,6,9-trioxaudecyl)bis(dodecylthio)propionate (Wingstay^{®} SN-1; Goodyear), and the like. Exemplary light stabilizers and absorbers include bis(1,2,2,6,6-pentamethyl-4-piperidinyl)-[[3,5-bis(1,1-dimethylethyl)-4-hydroxyphenyl]methyl]butylmalonate (Tinuvin^{®} 144 HALS; Ciba-Geigy), 2-(2H-benzotriazol-2-yl)-4,6-ditertpentylphenol (Tinuvin^{®} 328 absorber; Ciba-Geigy), 2,4-di-tert-butyl-6-(5-chlorobenzotriazol-2-yl)phenyl (Tinuvin^{®} 327 absorber; Ciba-Geigy), 2-hydroxy-4-(octyloxy)benzophenone (Chimassorb^{®} 81 absorber; Ciba-Geigy), and the like. The UV and oxidative resistance of polyolefin compositions are further discussed in PCT Publication No. WO 00/46256, the contents of which are incorporated herein by reference.

In addition, a suitable rate modifier such as, for example, triphenylphosphine (TPP), tricyclopentylphosphine, tricyclohexylphosphine, triisopropylphosphine, trialkylphosphites, triarylphosphites, mixed phosphites, pyridine, or other Lewis base, may be added to the olefin monomer to retard or accelerate the rate of polymerization as required. In the case of TPP rate modifier, it is preferably included in an amount of about 10-200 mg per 64 g olefin monomer. More preferably, the amount of TPP is about 20-100 mg per 64 g olefin monomer and, most preferably, is about 30-80 mg per 64 g olefin monomer. In the case of other rate modifiers, such as alkylphospines and pyridine, the amount of rate modifier is preferably about 0.1-50 mg per 64 g olefin monomer, more preferably about 1-40 mg per 64 g olefin monomer, and most preferably is about 1-30 mg per 64 g olefin monomer. A detailed description of rate modifiers can be seen in U.S. Patent No. 5,939,504 and U.S. Application No. 09/130,586, the contents of each of which are incorporated herein by reference.

Also, various pigments or dyes may be included in the polyolefin resin compositions of the invention for applications where color is desired. Preferred pigments include Ferro and Dayglo products, in an amount of about 0.05-2 parts per hundred of polyolefin resin. The cyclic olefin resin formulation may also contain coupling agents or adhesion agents that promote bonding between the walls of the substrate and the infused resin. United States Patent Numbers 6,040,363 and 6,001, 909, the disclosures of which are incorporated herein by reference, disclose various preferred sizing or coupling agents useful with cyclic olefin resin formulations. Especially preferred coupling agents are metathesis active adhesion agents as disclosed in WO 00/46257, the contents of which are incorporated herein by reference, and organotitanates and organozirconates such as the Ken-React^{®} products available from Kenrich Petrochemicals, Inc. Especially preferred organotitanates and organozirconates are those containing olefinic groups that may react during polymerization to form carbon-carbon chemical bonds with the resulting polycycloolefin polymer. Examples of such compounds include tetra(2,2-diallyloxymethyl)butyl di(ditridecyl)phosphito titanate (Ken-React^{®} KR 55), tetra(2,2-diallyloxymethyl)butyl di(ditridecyl)phosphito zirconate (Ken-React^{®} KZ 55), and cyclo[dineopentyl(diallyl)]pyrophosphato dineopentyl(diallyl) zirconate (Ken-React^{®} KZ TPP). Especially preferred metathesis active adhesion agents are olefin-containing silanes such as allyltrimethoxysilane, butenyltriethoxysilane, hexenyltriethoxysilane, octenyltriethoxysilane, norbornenyltriethoxysilane, norbornenylethyltriethoxysilane, and the like.

A wide variety of porous materials may be used in the present invention so long as such materials are pervious to the unpolymerized cyclic olefin resin formulation and do not contain chemical groups that are incompatible with the olefin metathesis catalyst. Such porous materials include but are not limited to wood, cement, concrete, open-cell and reticulated foams and sponges, papers, cardboards, felts, ropes or braids of natural or synthetic fibers, and various sintered materials. Preferred non-organic materials include unglazed porous ceramics, compacted free standing metal powder objects, and porous concrete aggregates such as cinder blocks. Preferred organic materials include wood, wood products and related cellulosic materials in various forms. These include but are not limited to monolithic wood objects as well as laminated wood, plywood, particleboard and chipboard objects and products. The most preferred porous materials are various types of wood.

Portland cement or concrete has an open pore structure that is interwoven and interconnected. One particular form of cement called Enhanced Porosity Cement (EPC) uses little or no sand and has a 20-25% void volume. The markedly porous structure of all cements and related materials allows for the ready diffusion of air, other gases and water vapor. This porous structure also facilitates moisture migration and the wicking of water. Such processes are capable of incorporating destructive pollutants such as nitrate, sulfate and chloride salts into the concrete. At various rates, these salts weaken the concrete structure, promote rusting of embedded steel reinforcing materials, which expand on oxidation and promote the formation of hairline cracks and fissures. Surface water from acid rain and salt water in marine applications present particularly difficult and corrosive environment for the use of concrete. Such problems are mitigated by the use of the infused composites of the present invention. Catalyzed cyclic olefin monomer formulations effectively infuse into the pore structure, cracks and fissures of concrete, and related materials, to provide chemically stable ROMP polymers that provide a barrier to water, water vapor and dissolved salts as well as a reduced permeability to corrosive gases such as NOₓ and SO₂. The infused concrete can also exhibit up to a three to four times increase in compressive strength, flexural strength and durability along with a 50-100% increase in the modulus of elasticity. These features, together with reduced permeability to water, greatly enhance durability to cycles of freezing and thawing.

In the practice of the present invention, the high reactivity and functional group tolerance of the preferred metathesis catalysts allow for polymerization within the porous structures of a wide variety of porous materials. These catalysts are effective at relatively low loading in resins, they operate at relatively low temperature, and are tolerant of reactive molecules surface absorbed in the porous structure and reactive functional groups on such surfaces, as well as such reactive functional groups in the resin materials. The initiation and polymerization rates of the cyclic olefin monomers may be controlled over a wide range by judicious choice of the chemical structure of the preferred metathesis catalyst and/or the use of rate-modifying additives as is well known in the art.

In the practice of the present invention, the low viscosity of the preferred cyclic olefin resin formulations facilitates the infusion of the porous materials. For example, DCPD has a much lower resin viscosity than other polymeric starting materials such as epoxy resins. The low viscosity of DCPD resins allows for a greater degree of infusion into porous and microporous structures characteristic of porous materials such as wood. The high reactivity of ROMP catalysts together with the low viscosity of the DCPD resin allows the resins to cure without the extreme temperatures and pressures required for other polymers derived from phenols, polyesters, epoxies, resorcinols or ureas that can cause breakdown of the porous material structure, especially for sensitive organic substrates such as wood. Unlike many other resinous materials, polymers derived from metathesis polymerization of cyclic olefin monomers are stable to hydrolysis and are insoluble in polar organic solvents and therefore yield infused products that are stable to leaching and polymer decomposition. The preferred resins are also compatible with and will accommodate a variety of additional additives and fillers to impart additional properties to the infused composites.

The resulting infused composites are generally tougher, harder, more dense, and more rigid than the starting porous substrate alone. For example, in the case of wood, less expensive softer woods are, therefore, able to replace more expensive harder woods in various applications such as sporting equipment, tool handles, furniture, flooring, railings, window frames, stairs, decking, etc; and marine applications such as boats, piers and pilings. Such infused and treated wood will be resistant to the uptake of water and resistant to rot and insect damage. The surface wear characteristics will be greatly improved for such applications. In applications in which an optimum level of water absorbed within the wood must be maintained to prevent further drying of the wood and cracking, suitably stable ROMP catalysts and resins are available to use within wood with various amounts of absorbed water in order to stabilize the wood to loss of such water.

The resulting compositions exhibit unique properties of the composite for the portion of the material that is infused, while the shape of the final product is determined by that of the starting free-standing object. Thus the invention allows for a wide variety of infused products to be manufactured without the use of complex molds.

The polyolefin-infused compositions of the invention are useful in the production of a variety of products in the areas of sports and recreation equipment, marine infrastructure, and construction and consumer goods where enhanced mechanical performance, durability, and/or moisture-resistance are required. Examples of sports and recreation products and applications include, but are not limited to, the following: golf tees, clubs (including weighted club heads), shafts, and gradient shafts (where the formulation or density varies along the length of the club shaft); basketball backboards; tennis rackets, squash rackets, racquetball rackets, and badminton racquets; snow boards, surfboards, boogie boards, skis, backboards, sleds, toboggans; baseball and cricket bats; hockey sticks; pool cues; archery bows and arrows; rifle butts; polo and croquet mallets; and tent stakes. Examples of marine infrastructure applications include, but are not limited to, the following: piers, docks, posts, decking, hulls, oars, propellers, rudders, keels, masts, boat fascia, kayaks, canoes, and ferro-cement boats. Examples of construction and consumer goods applications include, but are not limited to, the following: hand-tool handles, knife handles, ladders, wood flooring panels, deck lumber, treated concrete or cinder blocks, door and window frames, office furniture, concrete bridge decks, parking structure ramps, post-tensional beams and slabs, treated concrete pipes and channel liners for aggressive and acidic fluids, sewer pipes, containment structures, pavers, stone consolidation (e.g., James R. Clifton, National Bureau of Standards, Technical Note 1118, May 1980, Government Documents C 13.46:1118), plaster or concrete ornamental objects, and other pre-cast concrete objects.

Other porous materials infused with ROMP polymers to provide new composites with improved physical properties include unglazed sintered ceramics of all types including but not limited to ceramic magnets, superconducting ceramic materials, ceramic capacitors, and capacitors from reconstituted mica paper. Various open cell plastic foams, including but not limited to those derived from polyurethane, provide new compositions with a wide variety of applications. Graphite foams with continuous porous structures have a variety of novel applications as heat sinks and in thermal management technology. This material has the thermal conductivity of aluminum with approximately 20% of its weight. However applications of graphite foam are limited by the inherently brittle and friable nature of this material and corresponding incidental damage in use. Infusing ROMP polymers into graphite foam provide an effective means to ruggedize the structures and objects as formed and to yield new composites.

A variety of processing techniques, dependent upon the nature of the porous substrate and the cyclic olefin resin formulation, may be utilized to prepare the resin-infused composites of the present invention. For highly porous materials, it may be sufficient to place the porous substrate in a container and simply pour in the formulated resin. For medium-porosity materials, a simple dipping or soaking process may be feasible. For low-porosity or microporous materials, pressure or a combination of vacuum and pressure may be required to get the formulated resin to completely permeate the porous substrate. This may be accomplished by variations of standard processing techniques such as resin-transfer molding (RTM) or vacuum-assisted RTM (VARTM or SCRIMP^{®}, Seemann Composite Resin Infusion Molding Process). If a mold or container is required, such mold may be constructed of various materials including, for example, aluminum, teflon, delrin, high- and low-density polyethylenes (HDPE and LDPE, respectively), silicone, epoxy, aluminum-filled epoxy, polyurethane and aluminum-filled polyurethane, plaster, polyvinylchloride (PVC), and various alloys of stainless steel. The mold temperature is preferably about 20-150°C, more preferably about 30-100°C, and most preferably about 40-60°C. The infused part or article of the invention may also be subjected to a post-cure heating step. Preferably, the post-cure involves heating to about 60-200°C for about 10 minutes - 3 hours. More preferably, the post-cure involves heating to about 80-160°C for about 30 minutes - 2 hours and, and most preferably, heating to about 140°C for about 1 hour.

In the case of microporous substrates such as wood or concrete, use of a vacuum/pressure process is preferred to achieve good infusion with the cyclic olefin resin formulation. The vacuum process helps to remove air and water vapor from the pores of the substrate. After evacuation of the substrate, the resin formulation is applied and is drawn into the empty pores. Application of moderate pressure (typically between about 5 and 200 psi and preferably between about 40-60 psi) helps to push the resin fully into the pores of the substrate. The time required to fully infuse the particular article can vary widely based on the shape and pore structure of the article and the viscosity of the resin formulation but will typically vary from about 30 seconds to several hours. The progress of the infusion may be determined and/or controlled by monitoring the weight of the substrate. Pressure alone may be effective in the infusion of microporous substrates if their internal structure and/or the infusion methodology is such that any gas displaced by the infused resin can escape rather than becoming pressurized. If pressurization occurs, then the typically low-viscosity (at least before they are cured) cyclic olefin resin formulations may be at least partially expelled from the pores of the substrate upon the release of the externally applied pressure due to the backpressure exerted by the compressed gasses trapped within the pores.

Certain porous substrates may require chemical or mechanical pretreatment prior to the resin infusion process. For example, the pores of pre-shaped (e.g., machined) wood billets tend to be at least partially clogged by sawdust and other particulate impurities that hinder the ingress of resin during infusion. Careful mechanical cleaning of the surface of such wood billets with a wire brush has been found to be an effective, albeit labor intensive, pretreatment process. Surprisingly, it has been found that a high-pressure water spray treatment, which may clean and wet an object, followed by careful drying serves as an excellent pretreatment method for wood substrates. Although not wishing to be bound by theory, it is believed that this methodology more deeply opens the pores of water-swellable substrates such as wood due to both the mechanical cleaning action of the impinging water droplets at the surface of the substrate as well as the bulk expansion and contraction of the substrate during the overall wetting and drying process. This methodology also has the advantages that it is amenable to automation and that adhesion or coupling agents, that will facilitate chemical bonding between the resin and substrate, can be easily incorporated into the water treatment rather than as a separate step.

The following examples are illustrative of the invention.

### EXAMPLES

### Example 1

### Stiffness and Impact Resistance of Low-Grade White Ash

Several 3"-diameter billets of low-grade (≤1/16" grain spacing) northern white ash were turned down to 1 1/8" diameter dowels and cut to lengths of 10-12" (three per billet, labeled A-C). The stiffness of each specimen was measured by centering the dowel on a pair of support rods spaced 9 inches apart. A 50-pound load was applied to the center of the dowel, in the radial direction of the grain, and the deflection of the dowel was measured. The impact resistance of each dowel was determined by centering it on the same 9"-support and dropping a weighted impactor from increasing heights until sample failure was observed. The impact resistance is recorded as the maximum impact level and the sum total of all impacts achieved until failure. The data for several samples are reported in Table 1.

**Table 1**

| Sample Number | Density (pcf)* | Deflection (inches) | Max. Impact Level (ft·lb) | Total Impact Energy (ft·lb) |
|---|---|---|---|---|
| 1B | 40.45 | 0.009 | 32 | 114 |
| 2B | 41.39 | 0.011 | 26 | 96 |
| 4B | 37.96 | 0.010 | 23 | 70 |
| 5B | 39.99 | 0.009 | 36 | 200 |
| 9B | 40.04 | 0.009 | 31 | 150 |
| 17B | 38.68 | 0.008 | 36 | 199 |
| 19B | 40.94 | 0.014 | 23 | 91 |
| 31 B | 39.63 | 0.009 | 33 | 129 |
| 40B | 37.37 | 0.011 | 14 | 42 |
| Averages | 39.6 ± 1.3 | 0.010 ± 0.002 | 28 ± 7 | 121 ± 51 |

| | | | | |
|---|---|---|---|---|
| * pcf = pounds per cubic foot | | | | |

### Example 2

### Stiffness and Impact Resistance of Medium-Grade White Ash

Two 3"-diameter billets of medium-grade (≥ 1/8" grain spacing) northern white ash were turned down to 1 1/8" diameter dowels and cut to lengths of 10-12" (three per billet, labeled A-C). The stiffness and impact resistance of each specimen was measured as in Example 1. The data for several samples are reported in Table 2. The medium-grade wood exhibits consistently higher density, stiffness (e.g., lower deflection), and impact resistance than the low-grade wood.

**Table 2**

| Sample Number | Density (pcf) | Deflection (inches) | Max. Impact Level (ft·lb) | Total Impact Energy (ft·lb) |
|---|---|---|---|---|
| 0B | 45.60 | 0.010 | 50 | 815 |
| 12A | 47.50 | 0.007 | 42 | 513 |
| 12B | 47.86 | 0.007 | 42 | 765 |
| 12C | 46.23 | 0.008 | 42 | 723 |
| Averages | 46.8 ± 0.9 | 0.008 ± 0.001 | 44 ± 4 | 704 ± 115 |

### Example 3

### Pressure-Treatment of White Ash with DCPD Resin

A mixture comprising 100 grams of Ultrene^{®}-99 dicyclopentadiene (BF Goodrich), 3.0 grams of Ethanox^{®}-702 (Albemarle) primary antioxidant, 0.10 grams of triphenylphosphine inhibitor, 1.0 grams of Ferro PDI^{®} Type 34 blue colorant (to enable improved visualization of the extent of infusion of the resin into the wood grain), and 0.11 grams of (PCp₃)₂Cl₂Ru=CH-CH=CMe₂ metathesis catalyst was prepared and poured into a cylindrical mold. The temperature of the resin and mold was 21°C. A low-grade white ash dowel (1A), as described in Example 1 was placed into the mold. The mold was sealed and pressurized to 60 psi for one hour. The pressure was released and the dowel removed from the mold and heated in an oven at 60°C for eight hours to cure the resin. After curing, the surface of the dowel was lightly sanded to remove excess resin. The sanded dowel was then post-cured in an oven for one hour at 140°C. The density of the dowel increased from 40.77 pcf to 45.95 pcf due to the infused resin.

### Example 4

### Vacuum/Pressure-Treatment of White Ash with DCPD Resin

A mixture comprising 500 grams of Ultrene^{®}-99 dicyclopentadiene (BF Goodrich), 15 grams of Ethanox^{®}-702 (Albemarle) primary antioxidant, 0.5 grams of triphenylphosphine inhibitor, 5.0 grams of Ferro PDI^{®} Type 34 blue colorant (to enable improved visualization of the extent of infusion of the resin into the wood grain), and 0.55 grams of (PCp₃)₂ClRu=CH-CH=CMe₂ metathesis catalyst was prepared and poured into a cylindrical mold. The temperature of the resin and mold was 20°C. A low-grade white ash dowel (1C), as described in Example 1 was placed into the mold. The mold was sealed, evacuated to degas the resin and the pores of the dowel, and then pressurized to 60 psi for one hour. The pressure was released and the dowel removed from the mold and heated in an oven at 60°C for 6.5 hours to cure the resin. After light sanding to remove excess resin, the dowel was then post-cured in an oven for one hour at 140°C. The density of the dowel increased from 40.96 pcf to 49.72 pcf due to the infused resin. The stiffness of the treated wood also increased as evidenced by the decrease in the measured deflection from 0.013 inches before treatment to 0.011 inches after treatment.

### Example 5

### Modified Vacuum/Pressure-Treatment of White Ash with DCPD Resin

A mixture comprising 100 grams of Ultrene^{®}-99 dicyclopentadiene (BF Goodrich), 3 grams of Ethanox^{®}-702 (Albemarle) primary antioxidant, 0.1 grams of triphenylphosphine inhibitor, 1 gram of Ferro PDI^{®} Type 34 blue colorant (to enable improved visualization of the extent of infusion of the resin into the wood grain), and 0.11 grams of (PCp₃)₂Cl₂Ru=CH-CH=CMe₂ metathesis catalyst was prepared and poured into a cylindrical mold. The temperature of the resin and mold was 22°C. A low-grade white ash dowel (40A), as described in Example 1 was placed into the mold. The mold was sealed, evacuated to degas the resin and the pores of the dowel, and then pressurized to 60 psi for seven hours. The pressure was released and the dowel removed from the mold and heated in an oven at 60°C for eight hours to cure the resin. After light sanding to remove excess resin, the dowel was then post-cured in an oven for one hour at 140°C. The density of the dowel increased from 37.55 pcf to 45.90 pcf due to the infused resin. The stiffness of the treated wood also increased as evidenced by the decrease in the measured deflection from 0.026 inches before treatment to 0.013 inches after treatment.

### Example 6

### Pressure-Treatment of White Ash with Modified DCPD Resin

A DCPD resin formulation comprising approximately 3.5% of trimeric CPD isomers along with smaller amounts of higher oligomers was prepared by blending 44 grams of Ultrene^{®}-99 DCPD with 6 grams of CM15T (heat-treated DCPD containing approximately 29% trimeric CPD and smaller amounts of higher oligomers obtained from BF Goodrich), 1.5 grams of Ethanox^{®}-702 (Albemarle) primary antioxidant, 0.05 grams of triphenylphosphine inhibitor, 0.518 grams of Ferro PDI^{®} Type 34 blue colorant (to enable improved visualization of the extent of infusion of the resin into the wood grain), and 0.062 grams of (PCp₃)₂Cl₂Ru=CH-CH=CMe₂ metathesis catalyst. Thirty grams of this formulation was poured into a cylindrical mold. The temperature of the resin and mold was 20°C. A low-grade white ash dowel (40C), as described in Example 1 was placed into the mold. The top 1" of the dowel was not submersed in the resin. The mold was sealed and then pressurized to 60 psi for seven hours. The pressure was released and the dowel removed from the mold and heated in an oven at 140°C for one hour to cure/post-cure the resin. The density of the dowel increased from 38.32 pcf to 42.97 pcf due to the infused resin. The portion of the dowel that was not submersed in the resin appeared to contain less resin than the rest of the dowel.

### Example 7

### Impact Resistance of DCPD-Infused White Ash

The stiffness and impact resistance of the DCPD-infused white ash dowels of Example 3 - Example 6 were measured as described in Example 1. The data are summarized in Table 3, compared with untreated samples 1B and 40B from Example 1, and demonstrate the increased impact performance of the infused wood.

**Table 3**

| Sample Number | Example Number | Max. Impact Level (ft·lb) | Total Impact Energy (ft·lb) |
|---|---|---|---|
| 1A | Example 3 | 36 | 249 |
| 1B | Example 1 | 32 | 114 |
| 1C | Example 4 | 40 | 406 |
| 40A | Example 5 | 36 | 429 |
| 40B | Example 1 | 14 | 42 |
| 40C | Example 6 | 42 | 513 |

### Example 8

### Test to Measure Wood-Resin Adhesion

The adhesion between resin and wood can be measured using a 1" long wood dowel (1.125" diameter) with a ½" diameter hole drilled down through its center. The specimen can be optionally conditioned before the desired resin formulation is poured into the bore and cured into place. The adhesion between the wood and the resin is then evaluated by determining the force required to push the cast resin plug out of the bore. A baseline DCPD resin formulation comprising approximately 3.5% of trimeric CPD isomers along with smaller amounts of higher oligomers was prepared by blending 1,759 grams of Ultrene^{®}-99 DCPD with 241 grams of CM15T (heat-treated DCPD containing approximately 29% trimeric CPD and smaller amounts of higher oligomers obtained from BF Goodrich). Just prior to fabrication of the test specimens, appropriate quantities of the baseline resin were removed and mixed with 3 phr Ethanox^{®}-702 (Albemarle) antioxidant, 0.10 phr triphenylphosphine moderator, and 0.11 phr of (PCp₃)₂Cl₂Ru=CH-CH=CMe₂ metathesis catalyst. This mixture was poured into the bore and cured for 1 hour at 40°C to form a solid plug within the wood dowel. After 5 hours, the specimens were post-cured at 140°C for 1 hour. Results for a series of 32 different white ash wood specimens and the baseline DCPD / 3.5% trimer resin averaged 808 ± 147 psi.

### Example 9

### Silane Treatment of Wood to Improve Wood-Resin Adhesion

Five white ash wood specimens as described in Example 8 were soaked in a solution of 2 phr allyltriethoxysilane (Gelest) in 0.6 millimolar aqueous acetic acid for 20 minutes. The specimens were then dried for 3 hours at 60°C in an oven. The resin mixture of Example 8 was poured into the bore and cured for 1 hour at 40°C to form a solid plug within the wood dowel. After 5 hours, the specimens were post-cured at 140°C for 1 hour. Results for these specimens averaged 2,721 ±176 psi.

### Example 10

### Acetic Acid Treatment of Wood to Improve Wood-Resin Adhesion

Two white ash wood specimens as described in Example 8 were soaked in a solution of 0.6 millimolar aqueous acetic acid for 20 minutes. The specimens were then dried for 3 hours at 60°C in an oven. The resin mixture of Example 8 was poured into the bore and cured for 1 hour at 40°C to form a solid plug within the wood dowel. After 5 hours, the specimens were post-cured at 140°C for 1 hour. Results for these specimens averaged 2,593 ± 11 psi.

### Example 11

### Water Treatment of Wood to Improve Wood-Resin Adhesion

Five white ash wood specimens described in Example 8 were soaked in deionized water for 20 minutes. The specimens were then dried for 3 hours at 60°C in an oven. The resin mixture of Example 8 was poured into the bore and cured for 1 hour at 40°C to form a solid plug within the wood dowel. Results for these specimens averaged 2,606 ± 193 psi.

### Example 12

### Aqueous Isopropanol Treatment of Wood to Improve Wood-Resin Adhesion

Two white ash wood specimens as described in Example 8 were soaked in 50% isopropanol for 20 minutes. The specimens were then dried for 3 hours at 60°C in an oven. The resin mixture of Example 8 was poured into the bore and cured for 1 hour at 40°C to form a solid plug within the wood dowel. Results for these specimens averaged 2,526 ± 44 psi.

### Example 13

### Norbornene Treatment of Wood to Improve Wood-Resin Adhesion

Two white ash wood specimens as described in Example 8 were soaked in a solution of 0.2 grams of mono-methyl-cis-5-norbornene-endo-2,3-dicarboxylate (Sigma-Aldrich) in 10 grams of 50% isopropanol for 20 minutes. The specimens were then dried for 3 hours at 60°C in an oven. The resin mixture of Example 8 was poured into the bore and cured for 1 hour at 40°C to form a solid plug within the wood dowel. Results for these specimens averaged 2,308 ± 184 psi.

### Example 14

### Dependence of Wood-Resin Adhesion on Wood Density

Two specimens from each of nine different low-density white ash dowels ranging in density from 35.3 to 39.5 pcf were prepared as in Example 8. Results of the adhesion test with this series averaged 718 ± 213 psi. As can be seen in Chart 1, there is little dependence of the adhesion result on wood density over this density range.

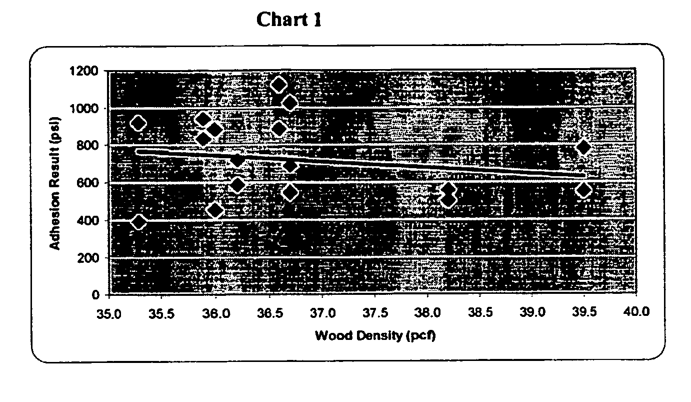

### Example 15

### Effect of Coupling Additives on White Ash Wood-Resin Adhesion

Specimens as described in Example 8 were prepared using low-grade white ash wood dowels, within the density range indicated in Example 14, wherein the resin mixture was modified by the addition of 1 phr of various titanate and zirconate coupling agents available from Kenrich Petrochemicals, Inc. The coupling agents evaluated included isopropyl triisostearoyl titanate (Ken-React^{®} KR TTS), tetraoctyl di(ditridecyl)phosphito titanate (Ken-React^{®} KR 46B), diallyloxyneopentyl tri(N-ethylenediaminoethyl) titanate (Ken-React^{®} LICA 38), tetra(2,2-diallyloxymethyl)butyl di(ditridecyl)phosphito titanate (Ken-React^{®} KR 55), and tetra(2,2-diallyloxymethyl)butyl di(ditridecyl)phosphito zirconate (Ken-React^{®} KZ 55). Three specimens were prepared and tested using each additive, and the results are summarized in Table 4. The KR 55 and KZ 55 additives, with metathesis reactive allyl groups, significantly increased wood-resin adhesion. The LICA 38 additive, although also containing metathesis reactive allyl groups, gave very poor results, presumably due to the presence of the basic amine groups which can poison the metathesis catalysts.

**Table 4**

| Additive | Adhesion Result (psi) |
|---|---|
| KR TTS | 960 ± 14 |
| KR 46B | 844 ± 220 |
| LICA 38 | 253 ± 34 |
| KR 55 | 1,363 ± 238 |
| KZ 55 | 1,480 ± 15 |

### Example 16

### Wood-Resin Adhesion with White Ash, Pine and Poplar

Specimens as described in Example 8 were prepared using pine and poplar along with white ash. Both the standard resin formulation as well as a modified formulation containing 0.5 phr Ken-React^{®} KR 55 coupling agent were used. The results are summarized in Table 5 and show that these woods behave similarly to white ash.

**Table 5**

| Wood Type | Adhesion with Standard Resin | Adhesion with Modified Resin |
|---|---|---|
| White Ash | 593 ± 198 psi | 1,543 ± 97 psi |
| Pine | 862 ± 110 psi | 1,735 ± 220 psi |
| Poplar | 755 ± 182 psi | 1,622 ± 184 psi |

### Example 17

### DCPD Resin Uptake By White Ash Baseball Bats

Resin uptake for a series of ten net-shape white ash bats is shown in Chart 2. Even though encompassing results involving many different parameter variations, the data appear to suggest that less resin can be infused into higher density wood. Although not totally unexpected, there does, perhaps, appear to be a preferred weight for the infused wood (around 1,000 grams - a little heavy for bat application) suggesting that it may be possible to upgrade a wide range of wood densities to a more consistent final product density.

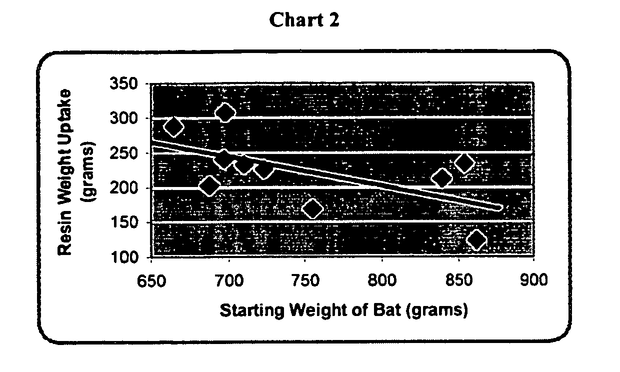

Chart 3 summarizes the results obtained for variations in infusion time. All of these experiments were performed using net-shape bats with 60-psi infusion pressure. Data for high-density (e.g., over 800 grams) and low-density (e.g., under 800 grams) bats were analyzed separately. The data suggest that infusion occurs fairly quickly, likely aided by the very low viscosity of the DCPD resins, although somewhat higher resin loadings might be attained with extended infusion times.

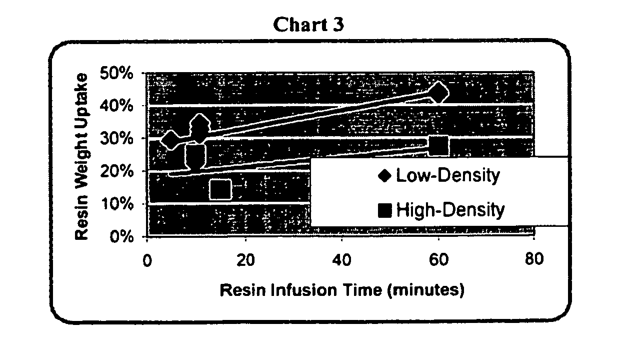

### Example 18

### Method of Spray-Washing Baseball Bats Prior to Infusion

Pre-shaped wood baseball bat blanks, with a cupped end, of minor grade white ash were weighed and then subjected to a high-pressure water spray treatment with ordinary municipal tap water under pressure of approximately 50 PSI across the bat from the knob to the handle to the barrel of the bat, as the bat was manually turned in order to completely cover the long axis and along the grain of the bat for approximately 30 seconds. The cupped end of the bat barrel and the knob end of the bat and across the grain of the wood were given particular attention with approximately 15 seconds of wash. This water spray treatment appeared to mechanically remove loose material, sand or saw dust and to open the end grain of the wood. The weight of the bat blanks before the water treatment varied from approximately 700 to 800 grams and from approximately 725 to 825 grams after the water wash. Each bat was then allowed to air dry for approximately 24 hours at ambient temperature and humidity during which the weight of the bat dropped to a range of approximately 710 to 810 grams. To finish the drying process, the bats were then placed into an oven at 60° C for 30 minutes. The oven temperature was then increased over a five-minute period to 100° C and maintained there for an additional 60 minutes. After cooling, the bats then weighed near or slightly below the original range of 700-800 grams.

### Example 19

### Method of Infusing Baseball Bats with DCPD Resin

A goal of the infusion process is to bring each wood bat up to a weight of 900 grams regardless of the starting weight of the bat. The stepwise process utilizing the equipment as shown in Figure 1 achieves this goal using a system of two separate metal chambers that are connected by high-pressure flexible tubing. One chamber is used to perform the infusion process (the "Mold") and the other is used to store the DCPD resin formulation (the "Resin Chamber"). The process allows a variety of DCPD resin formulations to be introduced to the free standing porous wooden bat under vacuum in order to completely coat or cover the bat, followed by raising the pressure of the liquid resin to facilitate its infusion into voids of the wood.

In a typical example, wood bat blanks of low-medium grade ash and with a cupped end are weighed and then subjected to a high-pressure water spray treatment as described in Example 18. After complete drying, each bat is then placed into the Mold of cylindrical dimensions sufficient to closely and completely enclose the bat and with a removable end to allow the bat to be placed in the vessel. The Mold is mounted vertically to allow the bat to be completely submerged in resin with the removable end at the top of the cylinder. The removable end of the Mold is equipped with two valves (V3 and V4) with removable tubing fittings with one to allow the chamber to be placed under vacuum and the other to allow the introduction of a gas under pressure to flush the resin from the chamber. A third pressure fitting and valve (V2) on the bottom of the Mold allows the introduction of DCPD resin formulations from the separate Resin Chamber. The Resin Chamber has a removable top equipped with a dip tube (V1) to allow resin from the bottom of the chamber to be introduced into the bottom of the infusion chamber through a flexible pressure tube. Additional valves (V5 and V6) are used for applying or venting pressure to the resin chamber. The Resin Chamber may be periodically refilled with freshly mixed DCPD resin formulation through valve V7.

In the infusion process, the mold, containing a bat, and the resin transfer tube are evacuated through valve V3, with valve V2 open and valves V1 and V4 closed, with a mechanical pump to approximately 10⁻³ atmospheres, which results in removal of air from the pores of the wood. The vacuum valve V3 is then closed, and the weighing mechanism is tared. The Mold is then completely backfilled with resin from the Resin Chamber by opening valves V1 and V5. The infusion pressure is controlled by the pressure of the inlet gas at valve V5 and is usually 55 psi or more to promote the infusion of the formulated DCPD resin into the porous structure of the wood. The total weight of the mold is continuously monitored until the uptake of resin is sufficient to bring the total weight of each bat up to a weight of 900 grams. This can be easily calculated for each bat if the Mold volume and the bat volume and weight are known. The time that this can take typically varies from as short as 10 seconds to as long as 7 minutes. Once the desired amount of resin has been introduced into the Mold, valves V2 and V5 are closed and the pressure is released from the Resin Chamber by opening pressure release valve V6. After a slight delay, the excess DCPD resin in the mold is then flushed back into the resin chamber by opening valves V2 and V4. Once all of the excess resin has been returned to the Resin Chamber, Valves V1 and V4 and then Valves V2 and V6 are closed. The Mold is then opened, the infused bat is removed to a curing oven, and the next bat is placed into the Mold so that the cycle can be repeated. If required, additional DCPD resin formulation can also be added to the Resin Chamber at this time.

The resin curing process is promoted by placing the infused bat in an oven at 60° C for 30 minutes, followed by 2 hours at room temperature, and then a final post-cure at 140° C for 1 hour. After cooling back to room temperature, the bat is then ready for finishing to a commercial product by a final sanding, painting and/or the addition of graphics, and application of a polyurethane top-coat for UV protection and improved appearance.

### Example 20

### Durability of DCPD-Infused Wood Baseball Bats

A sampling of pre-shaped but otherwise unfinished wooden bats were obtained and sorted into three grades according to the number of grains counted at the knob. Longstanding experience with baseball bats indicates that lower grain counts correspond to increased durability. Therefore, high-grade bats had grain counts of about 16 or less, medium-grade bats had grain counts from about 17 to 28, and low-grade bats had grain counts of about 29 or greater. Half of the bats were finished normally with a polyurethane top coat while the other half were infused with DCPD resin as described in Example 19. Chart 4 shows the number of "hits-to-failure" for these untreated and DCPD-infused wood bats relative to the grain count. Obviously, there is considerable natural variation within wood, but untreated high-grade baseball bats would typically be expected to exhibit approximately 200-250 hits to failure while low-grade or medium-grade bats would typically fail after fewer hits. The infused bats typically exhibit greater durability (usually greater than 300 hits-to-failure) than comparable untreated bats and allow a much lower grade of wood to perform as well or better than untreated bats made of high-grade wood.

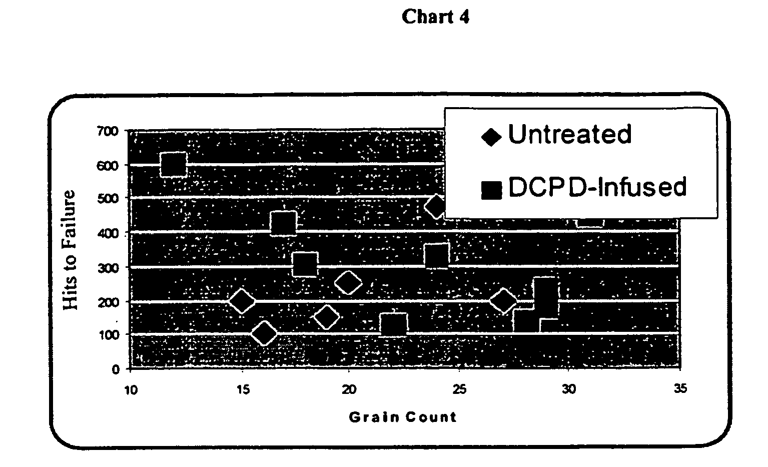

### Example 21

### Dent-Resistance of DCPD-Infused Wood Baseball Bats

One of the unexpected features of the DCPD-infused wood is its greater surface "toughness" or its ability to resist denting, compared to untreated wood. Since surface denting is a significant contributor to the failure of wooden bats, increased surface hardness is desirable feature. Chart 5 shows the depth of dents measured in both untreated and DCPD-infused baseball bats relative to the number of hits sustained. These measurements were done with a baseball impinging at 136 miles per hour, 5 inches from the barrel end and with the wood grain parallel to the point of impact. The data demonstrate the significant resistance to denting by the infused wood.

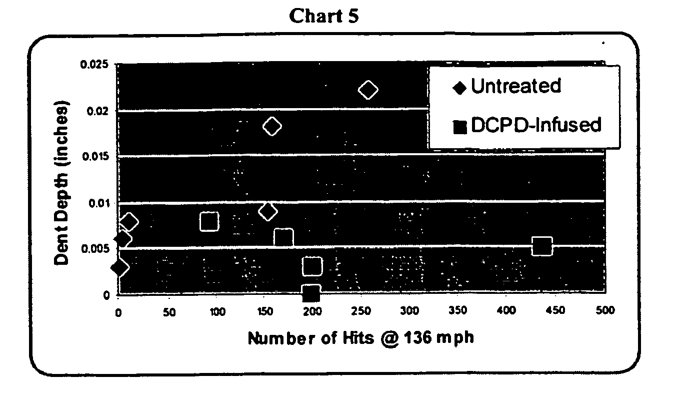

### Example 22

### Infusion of a Porous Concrete Block

A DCPD resin formulation comprising approximately 3.5% of trimeric CPD isomers along with smaller amounts of higher oligomers was prepared by blending an 88/12 mixture of Ultrene^{®}-99 DCPD and CM15T (heat-treated DCPD containing approximately 29% trimeric CPD and smaller amounts of higher oligomers obtained from BF Goodrich), with 3 phr of Ethanox^{®}-702 (Albemarle) primary antioxidant, 0.1 phr of triphenylphosphine inhibitor, and 0.124 phr of (PCp₃)₂Cl₂Ru=CH-CH=CMe₂ metathesis catalyst. This resin mixture was poured over small pieces of porous concrete block in a mold. The mold was sealed and then pressurized to 55 psi. The pressure was released and the infused pieces removed from the mold and allowed to cure overnight at room temperature. The next day, they were post-cured in an oven at 140°C for one hour. Weight measurements indicated about 10% resin pickup by the concrete block pieces and there was no odor of unpolymerized DCPD. The infused pieces were normal in appearance but exhibited increased hydrophobicity.

### Example 23

### Properties DCPD-Infused Wood

Samples of birch, cherry, douglas fir, maple, poplar, red oak, southern yellow pine, and white ash woods were cut into 1" x 1" x 12" rectangular dowels. The cut samples were washed using pressurized tap water (90 psi) for 1 minute and then air-dried for 48 hours at room temperature (20-24°C). The specimens were further dried in a vacuum oven for 48 hours at room temperautre and then an additional 48 hours at 40°C. The weight of each of the dowels after this treatment ranged from 4-6% less that its starting weight. Once removed from the oven, the samples were kept under static vacuum at room temperature until infused. For infusion, a dowel was placed into a 1.25" x 1.25" x 18" chamber, which was then evacuated to a vacuum of between 25-29 mm Hg (usually about 1 minute). Resin was then backfilled into the chamber and then pressurized to 40-45 psi for 2-3 minutes to fully infuse the specimens. At the end of this cycle, the pressure was released and the resin drained out of the chamber. The specimen was then moved into a oven and cured at 60°C for 1 hour and then post-cured at 160°C for an additional hour. Four variations were tested for each type of wood: (a) a control that was washed and dried but not infused; (b) a baseline resin formulation comprising DCPD with a 10% trimeric CPD content, 3 phr Ethanox^{®}-702 antioxidant, 0.2 phr triphenylphosophine inhibitor, and 0.104 phr of (PCp₃)₂ChRu=CH-CH=CMe₂ metathesis catalyst; (c) a modified resin formulation comprising DCPD with a 10% trimeric CPD content, 3 phr Ethanox^{®}-702 antioxidant, 0.2 phr triphenylphosophine inhibitor, 1 phr Ken-React^{®} KR 55 organotitanate, and 0.104 phr of (PCp₃)₂ChRu=CH-CH=CMe₂ metathesis catalyst; and (d) a modified resin formulation comprising DCPD with a 10% trimeric CPD content, 3 phr Ethanox^{®}-702 antioxidant, 0.2 phr triphenylphosophine inhibitor, 1 phr Ken-React^{®} KZ TPP organozirconate, and 0.104 phr of (PCp₃)₂Cl₂Ru=CH-CH=CMe₂ metathesis catalyst. The final resin uptake for each specimen is summarized in Table 6. The flexural properties were tested using a specimen of each of the woods by a 3-point bending method and are summarized in Table 7. The compression properties were tested for each piece parallel to the direction of the grain and are summarized in Table 8. The Shore D hardness was measured for a specimen of each wood and is summarized in Table 9.

**Table 6**

| Resin Uptake (%) by Each Specimen | | | | | | |
|---|---|---|---|---|---|---|
| | Treatment (b) | | Treatment (c) | | Treatment (d) | |
| | i | ii | i | ii | i | ii |
| birch | 23.2 | 22.2 | 28.0 | 29.4 | 23.0 | 21.0 |
| cherry | 14.0 | 9.8 | 18.7 | 24.8 | 23.4 | 11.2 |
| douglas fir | 4.7 | 8.9 | 5.8 | 10.0 | 7.0 | 5.3 |
| maple | 28.7 | 28.8 | 24.1 | 25.2 | 22.5 | 25.5 |
| poplar | 40.9 | 42.9 | 39.5 | 40.0 | 40.4 | 40.2 |
| red oak | 20.7 | 20.4 | 20.7 | 20.7 | 21.5 | 21.8 |
| southern yellow pine | 41.3 | 40.0 | 45.6 | 42.2 | 39.2 | 38.5 |
| white ash | 45.2 | 46.1 | 47.2 | 46.0 | 44.8 | 45.2 |

**Table 7**

| 3-Point Bending Modulus (ksi) for Infused Wood | | | | |
|---|---|---|---|---|
| | Control | Treatment (b-i) | Treatment (c-i) | Treatment (d-i) |
| birch | 1,240 | 1,550 | 1,680 | 1,640 |
| cherry | 1,190 | 1,330 | 1,350 | 1,270 |
| douglas fir | 1,000 | 880 | 996 | 1,100 |
| maple | 2,100 | 2,300 | 2,400 | 1,700 |
| poplar | 1,400 | 1,700 | 1,600 | 1,800 |
| red oak | 1,370 | 1,510 | 1,410 | 1,360 |
| southern yellow pine | 860 | 1,240 | 1,280 | 1,480 |
| white ash | 670 | 990 | 850 | 1,030 |

**Table 8**

| Compression Strength (psi) for Infused Wood | | | | |
|---|---|---|---|---|
| | Control | Treatment (b-i) | Treatment (c-i) | Treatment (d-i) |
| birch | 9,400 | 13,600 | 14,700 | 13,500 |
| cherry | 8,200 | 10,800 | 13,400 | 13,300 |
| douglas fir | 7,300 | 8,700 | 9,500 | 9,400 |
| poplar | 8,900 | 14,600 | 15,400 | 15,400 |
| red oak | 9,300 | 12,900 | 13,300 | 13,400 |
| southern yellow pine | 7,000 | 13,100 | 13,700 | 14,700 |
| white ash | 6,700 | 11,200 | 14,300 | 15,000 |

**Table 9**

| Shore D Hardness for Infused Wood | | | | |
|---|---|---|---|---|
| | Control | Treatment (b-ii) | Treatment (c-ii) | Treatment (d-ii) |
| birch | 68 | 76 | 82 | 82 |
| cherry | 65 | 75 | 80 | 77 |
| douglas fir | 50 | 65 | 65 | 65 |
| maple | 72 | 82 | 86 | 84 |
| poplar | 62 | 80 | 82 | 81 |
| red oak | 70 | 75 | 75 | 78 |
| southern yellow pine | 50 | 72 | 72 | 72 |
| white ash | 65 | 76 | 76 | 80 |

### Example 24

### Properties DCPD-Infused Cardstock

A resin formulation comprising DCPD with 10% trimeric CPD content, 3 phr Ethanox^{®}-702 antioxidant, 0.2 phr triphenylphosophine inhibitor, 1 phr Ken-React^{®} KR 55 organotitanate, and 0.104 phr of (PCp₃)₂Cl₂Ru=CH-CH=CMe₂ metathesis catalyst was applied to pieces of 0.010" thick predried cardstock cut into a dogbone shape suitable for tensile testing. The resin appeared to quickly wet into the porous web. The sheet was then cured for 1 hour at 40°C, 2 hours at room temperature, and then post-cured for 1 hour at 140°C. Using this methodology, a series of 6 specimens picked up an average of 3.37 ± 0.54 % resin. The dry, but untreated, cardstock exhibited the following tensile properties: 5,979 psi tensile strength, 313,597 tensile modulus, and 3.60 % strain-to-break. The treated cardstock exhibited the following improved tensile properties: 6,663 psi tensile strength, 375,936 psi tensile modulus, and 3.20 % strain-to-break.

## Claims

1. A method for preparing a polyolefin-infused porous material comprising:
(a) mixing an olefin monomer resin formulation with metathesis catalyst to form a catalyzed resin formulation,
(b) infusing the mixture into a porous material wherein the porous material is selected from the group consisting of wood, cement, concrete, open-cell and reticulated foams and sponges, papers, cardboards, felts, ropes or braids of natural or synthetic fibers, and sintered materials, and the mixture penetrates into the pores of porous material, and
(c) curing the catalzyed resin formulation within said porous material.

2. The method of claim 1, wherein the olefin monomer resin formulation comprises an olefin monomer selected from the group consisting of norbornenes, cyclopropenes, cylobutenes, benzocyclobutenes, cyclopentenes, cyclopentadiene oligomers, cyclohexenes, cycloheptenes, cyclooctenes, cyclooctadienes, norbornadienes, [2.2.1.]bicycloheptenes, [2.2.2.]bicyclooctene, cyclohexenylnorbornenes, and norbornene dicarboxylic anhydrides.

3. The method of claim 1 or claim 2, wherein the olefin monomer resin formulation comprises dicyclopentadien.

4. The method of any of claims 1 to 3, wherein the olefin monomer resin formulation includes a coupling agent.

5. The method of claim 4, wherein the coupling agent is selected from the group consisting of organotitanates, organozirconates, and silanes.

6. The method of any of claims 1 to 5, wherein the metathesis catalyst is a ruthenium or osmium metal carbene complex.

7. The method of any of claims 1 to 6, wherein the metathesis catalyst is selected from the group consisting of a catalyst of the formula: 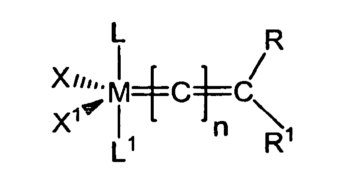 a catalyst of the formula: 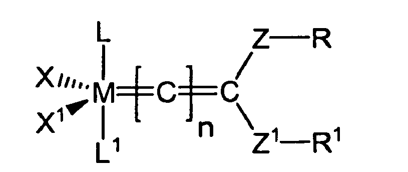 a catalyst of the formula: 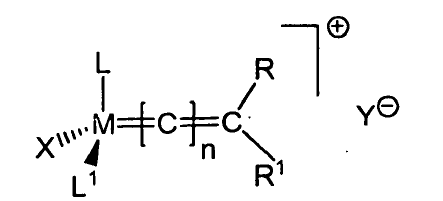 a catalyst of the formula: 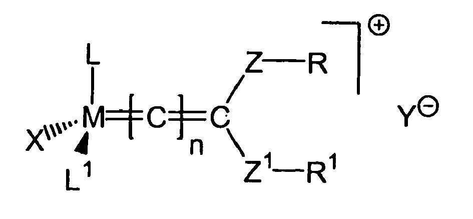 a catalyst of the formula: 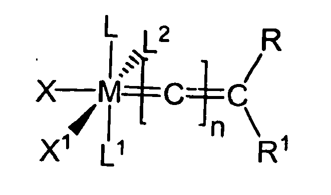 a catalyst of the formula 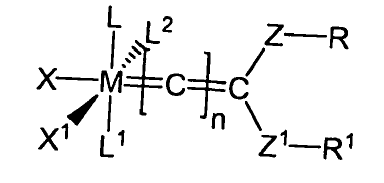 wherein:
M is ruthenium or osmium;
n is an integer between 0-5;
L, L¹ and L² are each independently any neutral electron donor ligand;
R and R¹ are each independently hydrogen or any hydrocarbyl or silyl moiety;
X and X¹ are each independently any anionic ligand;
Y is any noncoordinating anion; and
Z and Z¹ are each independently any linker selected from the group consisting of -O-, -S-; -NR²-, -PR²-, -P(=O)R²-, -P(OR²)-, -P(=O) (OR²) -, -C(=O)-, -C(=O)O-, -OC(=O)-, -OC(=O)O-, -S(=O)-, or -S(=O)₂-.

8. A method for preparing a polyolefin-infused wood object according to any of the preceding claims, comprising:
spraying a wood object with a cleaning and wetting high-pressure water spray;
drying the object, wherein the drying is performed by heat and vacuum;
infusing the object with a mixture of an olefin monomer resin formulation and a metathesis catalyst under pressure;
curing the catalyzed resin formulation within the wood object;
and post-curing the polyolefin-infused wood object.

## Patentansprüche

1. Verfahren zur Herstellung eines polyolefin-infundierten porösen Materials, das umfasst:
(a)Mischen einer Olefinmonomer-Harzformulierung mit einem Metathese-Katalysator, um eine katalysierte Harzformulierung zu bilden,
(b) Infundieren der Mischung in ein poröses Material, wobei das poröse Material ausgewählt ist aus der Gruppe, die besteht aus Holz, Zement, Beton, offenzelligen und retikulierten Schäumen und Schwämmen, Papieren, Pappen, Filzen, Seilen oder Litzen aus natürlichen oder synthetischen Fasern, sowie gesinterten Materialien, und die Mischung dringt in die Poren des porösen Materials ein, und
(c)Aushärten der katalysierten Harzformulierung innerhalb des porösen Materials.

2. Verfahren nach Anspruch 1, wobei die Olefinmonomer-Harzformulierung ein Olefinmonomer umfasst, das ausgewählt ist aus der Gruppe, die besteht aus Norbornenen, Cyclopropenen, Cyclobutenen, Benzocyclobutenen, Cyclopentenen, Cyclopentadienoligomeren, Cyclohexenen, Cycloheptenen, Cyclooctenen, Cyclooctadienen, Norbornadienen, [2.2.1.]Bicycloheptenen, [2.2.2.]Bicycloocten, Cyclohexenylnorbornenen und Norbornendicarbonsäureanhydriden.

3. Verfahren nach Anspruch 1 oder Anspruch 2, wobei die Olefinmonomer-Harzformulierung Dicyclopentadien umfasst.

4. Verfahren nach irgendeinem der Ansprüche 1 bis 3, wobei die Olefinmonomer-Harzformulierung ein Kupplungsmittel beinhaltet.

5. Verfahren nach Anspruch 4, wobei das Kupplungsmittel aus der Gruppe ausgewählt ist, die besteht aus Organotitanaten, Organozirkonaten und Silanen.

6. Verfahren nach irgendeinem der Ansprüche 1 bis 5, wobei der Metathese-Katalysator ein Ruthenium- oder Osmium-Metallcarbenkomplex ist.

7. Verfahren nach irgendeinem der Ansprüche 1 bis 6, wobei der Metathese-Katalysator aus der Gruppe ausgewählt ist, die besteht aus einem Katalysator der Formel: 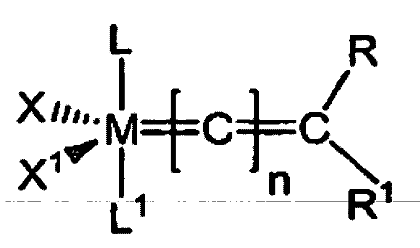 einem Katalysator der Formel: 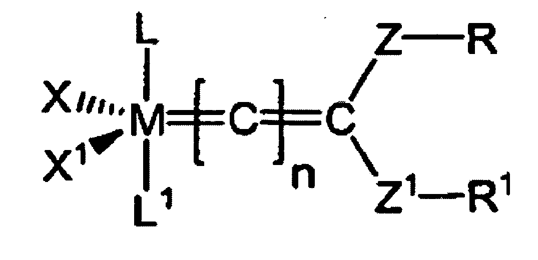 einem Katalysator der Formel: 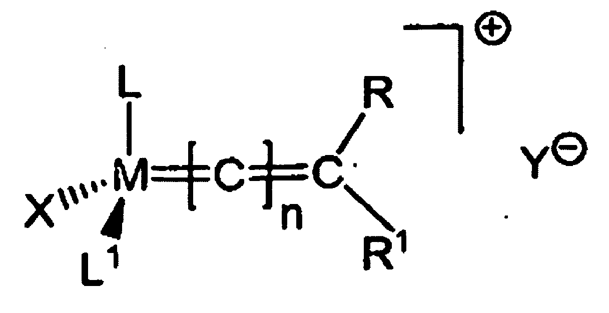 einem Katalysator der Formel: 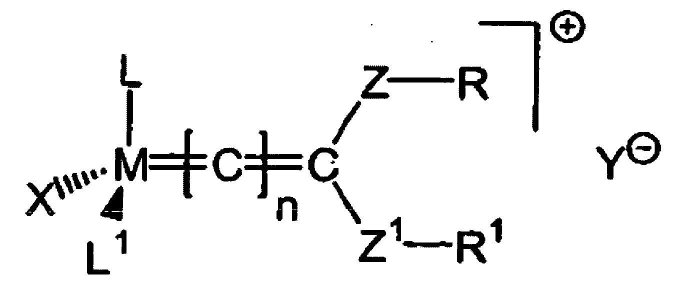 einem Katalysator der Formel: 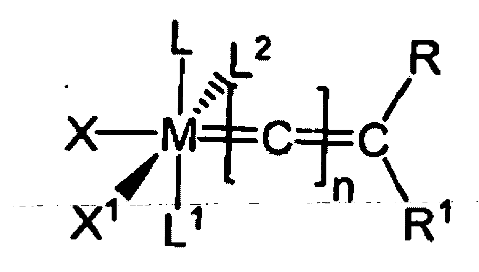 einem Katalysator der Formel: 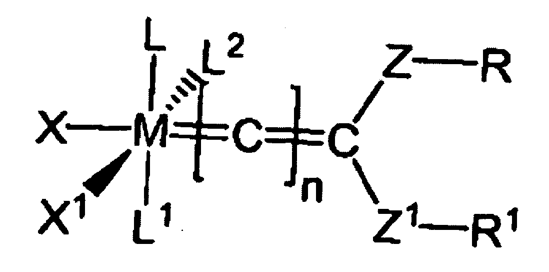 worin:
M Ruthenium oder Osmium ist;
n eine ganze Zahl zwischen 0-5 ist;
L, L¹ und L² jeweils unabhängig voneinander ausgewählt sind aus irgendeinem neutralen Elektronendonor-liganden;
R und R¹ jeweils unabhängig voneinander Wasserstoff oder eine Kohlenwasserstoff- oder Silyleinheit sind;
X und X¹ jeweils unabhängig voneinander irgendein anionischer Ligand sind;
Y irgendein nichtkoordinierendes Anion ist; und
Z und Z¹ jeweils unabhängig voneinander irgendein Verknüpfer ist, der ausgewählt ist aus der Gruppe, die besteht aus -O-, -S-; -NR²-, -PR²-, -P(=O)R²-, -P(=OR²)-, -P(=O) (OR²)-, -C(=O) -, -C (=O) O-, -OC (=O) -. -OC(=O)O-, -S (=O) - oder -S (=O)₂-.

8. Verfahren zur Herstellung eines polyolefin-infundierten Holzgegenstands nach irgendeinem der vorausgehenden Ansprüche, das umfasst:
Besprühen eines Holzgegenstands mit einem reinigenden und benetzenden Hochdruck-Wassersprühstrahl :
Trocknen des Gegenstands, wobei das Trocknen durch Wärme und Vakuum durchgeführt wird,
Infundieren des Gegenstands mit einer Mischung einer Olefinmonomer-Harzformulierung und eines Metathese-Katalysators unter Druck;
Aushärten der katalysierten Harzformulierung innerhalb des Holzgegenstands;
und Nachhärten des polyolefin-infundierten Holzgegenstands.

## Revendications

1. Procédé de préparation d'un matériau poreux infusé d'une polyoléfine, comprenant les étapes consistant à:
(a) mélanger une composition de résine de monomère oléfinique à un catalyseur de métathèse pour former une composition de résine catalysée,
(b) infuser le mélange dans un matériau poreux, le matériau poreux étant choisi dans le groupe formé de: bois, ciment, béton, éponges et mousses à cellules ouvertes et réticulées, papiers, cartons, feutres, câbles ou tresses en fibres naturelles ou synthétiques, et matériaux frités, le mélange pénétrant dans les pores du matériau poreux, et
(c) polymériser la compositions de résine catalysée à l'intérieur dudit matériau poreux.

2. Procédé selon la revendication 1, dans lequel la composition de résine de monomère oléfinique comprend un monomère oléfinique choisi dans le groupe formée de norbornènes, cyclopropènes, cyclobutènes, benzocyclobutènes, cyclopentènes, oligomères de cyclopentadiène, cyclohexènes, cycloheptènes, cyclooctènes, cyclooctadiènes, norbornadiènes, [2.2.1]bicycloheptènes, [2.2.2] bicyclooctène, cyclohexénylnorbornènes, et anhydrides dicarboxyliques de norbornène.

3. Procédé selon la revendication 1 ou la revendication 2, dans lequel la composition de résine de monomère oléfinique comprend le dicyclopentadiène.

4. Procédé selon l'une quelconque des revendications 1 à 3, dans lequel la composition de résine de monomère oléfinique comprend un agent de couplage.

5. Procédé selon la revendication 4, dans lequel l'agent de couplage est choisi dans le groupe formé d'organotitanates, d'organozirconates, et de silanes.

6. Procédé selon l'une quelconque des revendications 1 à 5, dans lequel le catalyseur de métathèse est un complexe de carbène de ruthénium ou d'osmium métallique.

7. Procédé selon l'une quelconque des revendications 1 à 6, dans lequel le catalyseur de métathèse est choisi dans le groupe formé d'un catalyseur de composition 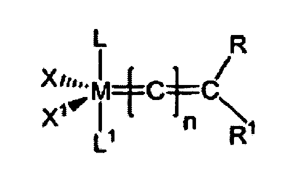 d'un catalyseur de composition 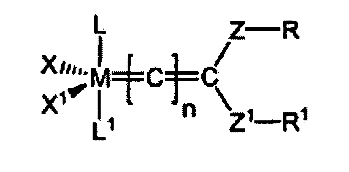 d'un catalyseur de composition 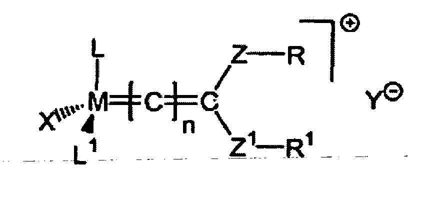 d'un catalyseur de composition 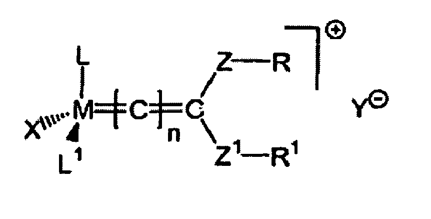 d'un catalyseur de composition 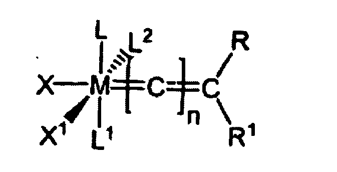 d'un catalyseur de composition 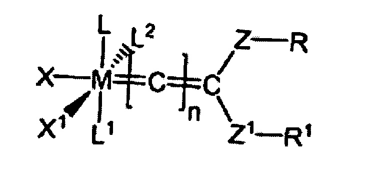 dans lesquelles
M représente le ruthénium ou l'osmium,
n est un entier entre 0 et 5,
L, L¹ et L² représentent chacun indépendamment tout ligand neutre, donneur d'électron,
R et R¹ représentent chacun indépendamment l'hydrogène ou toute fraction hydrocarbyle ou silyle:
X et X¹ représentent chacun indépendamment tout ligand anionique;
Y représente tout anion non coordinant; et
Z et Z¹ représentent chacun indépendamment tout élément de liaison choisi dans le groupe formé de -O-, -S-, -NR²-, -PR²-, -P (=O) R²-, -P(OR²)-, -P(=O) (OR²)-, -C (=O) -, -C (=O) O-, -OC (=O) -, -OC (=O) O-, -S (=O) -, ou -S(=0)₂-.

8. Procédé de préparation d'un objet en bois infusé d'une polyoléfine, selon l'une quelconque des revendications précédentes, comprenant les étapes consistant à:
pulvériser de l'eau à haute pression sur un objet en bois, pour le nettoyer et le mouiller;
sécher l'objet, le séchage étant effectué par chaleur et dépression;
infuser l'objet d'un mélange sous pression d'une composition de résine de monomère oléfinique et d'un catalyseur de métathèse
polymériser la composition de résine catalysée à l'intérieur de l'objet en bois;
et faire subit un post-traitement de polymérisation à l'objet en bois infusé de la polyoléfine.
